# EUROPÄISCHE PATENTSCHRIFT

(11) **EP 1 259 774 B1**
(45) Veröffentlichungstag und Bekanntmachung des Hinweises auf die Patenterteilung: **03.09.2003**
(21) Anmeldenummer: 01905471.7
(22) Anmeldetag: 06.02.2001
(51) Int. Cl.: F28D 20/00

(54) **ANLAGE ZUR SPEICHERUNG VON WÄRMEENERGIE BZW. VON KÄLTEENERGIE**
ARRANGEMENT FOR STORING HEAT ENERGY OR COLD ENERGY
INSTALLATION POUR STOCKER DE LA THERMO-ENERGIE OU DE LA CRYO-ENERGIE

(30) Priorität: 17.02.2000 AT 2382000
(43) Veröffentlichungstag der Anmeldung: 27.11.2002
(73) Patentinhaber: Schwarz, Alois, A-6382 Kirchdorf in Tirol (AT)
(72) Erfinder: Schwarz, Alois, A-6382 Kirchdorf in Tirol (AT)
(74) Vertreter: Atzwanger, Richard, Dipl.-Ing. Patentanwalt
(86) Internationale Anmeldenummer: AT0100028
(87) Internationale Veröffentlichungsnummer: WO01061261

(56) Entgegenhaltungen:
- DE-A- 2 948 417
- DE-A- 3 224 854
- US-A- 4 063 546

## Beschreibung

Die gegenständliche Erfindung betrifft eine Anlage zur Speicherung von Wärmeenergie oder von Kälteenergie mit im Erdboden befindlichen Rohrleitungen wie im Oberbegriff des Patentanspruchs 1 definiert ist. Eine derartige Anlage ist zum Beispiel aus der DE-A1-2 948 417 bekannt.

Es ist bekannt, im Erdboden Rohrleitungen zu verlegen, durch welche ein Trägermedium für Wärmeenergie oder für Kälteenergie hindurchgeleitetet wird, wobei das die Rohrleitungen umgebende Erdreich als thermischer Speicher dient. Bekannte derartige Anlagen sind jedoch deshalb nicht den Erfordernissen entsprechend, da thermische Energie in den Erdboden übertritt und aus diesem abfließt, wodurch sie verloren geht.

Der gegenständlichen Erfindung liegt somit die Aufgabe zugrunde, eine Anlage zu schaffen, welche so ausgebildet ist, daß in dieser gespeicherte thermische Energie nahezu vollständig wieder gewonnen und Verbrauchern zugeführt werden kann. Dies wird erfindungsgemäß dadurch erzielt, daß mehrere ineinander angeordnete Bereiche vorgesehen sind, welche jeweils Energie speicherndes Material und Rohrleitungen enthalten und welche nach außen isoliert sind, wobei die in den einzelnen Bereichen angeordneten Rohrleitungen an Verbraucher bzw. an Erzeuger von Energie mit unterschiedlichen Temperaturniveaus anschließbar sind wie in Anspruch 1 definiert 27.

Vorzugsweise sind diese Bereiche zylindrisch bzw. hohlzylindrisch ausgebildet, wobei sie zueinander konzentrisch angeordnet sind. Nach weiteren bevorzugten Merkmalen ist der innerste Bereich mit einer elektrischen Heizeinrichtung und bzw. oder mit mindestens einer Rohrleitung für den Anschluß an einen Kollektor für Umweltenergie ausgebildet. Dabei ist insbesondere der innerste Bereich für die Speicherung von Wärmeenergie mit einer Temperatur zwischen 100°C und 500°C, der außerhalb von diesem befindliche Bereich zur Speicherung von Energie mit einer Temperatur von 80°C bis 50°C und der diesen umgebende Bereich zur Speicherung von Wärmeenergie mit einer Temperatur von 50°C bis 25°C vorgesehen.

Nach einem weiteren bevorzugten Merkmal ist an der Innenseite mindestens eines der Bereiche ein Reflektor vorgesehen. Weiters kann die Anlage durch einen Behälter gebildet sein, welcher in an sich bekannter Weise aus Beton gefertigt ist, in welchem die Rohrleitungen angeordnet sind.

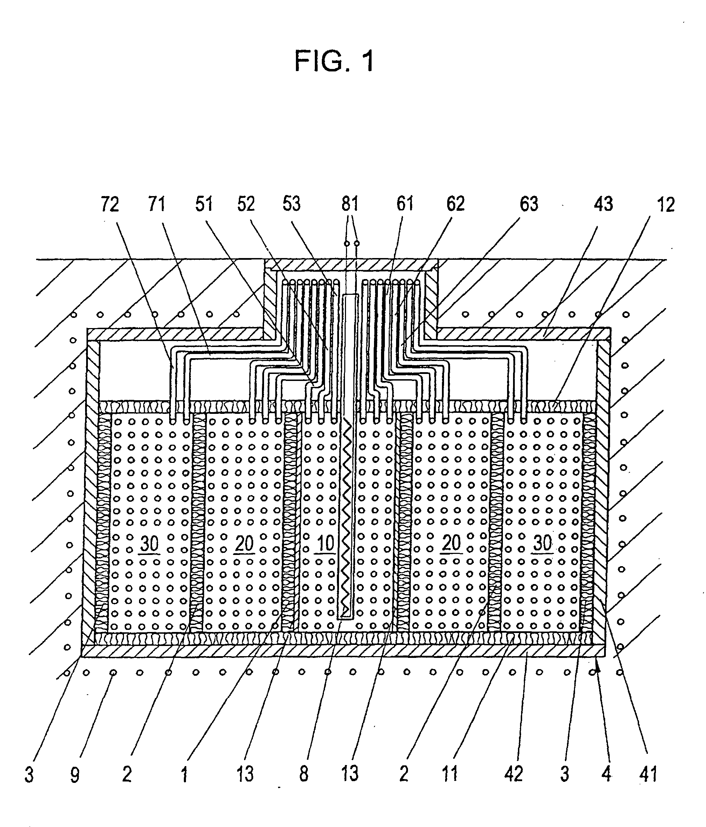

Der Gegenstand der Erfindung ist nachstehend anhand eines in der Zeichnung dargestellten Ausführungsbeispiels näher erläutert. Die Fig.1 zeigt eine erfindungsgemäße Anlage, in vertikalem Schnitt.

Wie dies aus der Zeichnung ersichtlich ist, befindet sich eine Anlage zur Speicherung von thermischer Energie im Erdboden. Diese Anlage weist eine innen liegende erste Wand 1 auf, weiters eine außerhalb der ersten Wand 1 befindliche zweite Wand 2 und außerhalb der zweiten Wand 2 eine dritte Wand 3 auf, wobei durch die drei Wände 1, 2 und 3 drei jeweils ineinander befindliche Bereiche 10, 20 und 30 gebildet sind, welche mit einem Material erfüllt sind, welches eine sehr hohe thermische Speicherwirkung aufweist. Das Speichermaterial kann z.B. durch Beton oder Lehm gebildet sein.
Sämtliche diese Wände 1, 2 und 3 sind aus thermisch isolierendem Material hergestellt. Zudem sind eine gleichfalls aus thermisch isolierendem Material hergestellte Bodenplatte 11 und eine Deckplatte 12 vorgesehen, durch welche die Bereiche 10, 20 und 30 nach oben und nach unten abgeschlossen sind. Weiters ist an der Innenseite der Wand 1 ein thermischer Reflektor 13 vorgesehen. Weiters können sich diese Wände 1, 2 und 3 innerhalb eines z.B. aus armiertem Beton hergestellten Behälters 4 befinden, welcher gleichfalls einen Mantel 41 aufweist und welcher mit einer Bodenplatte 42 und mit einer Deckplatte 43 ausgebildet ist. Außerhalb des Behälters 4 befindet sich eine weitere Rohrleitung 9 eines Erdkollektors.

In den Bereichen 10, 20 und 30 befinden sich jeweils mehrere vom Speichermaterial umgebene Rohrleitungen 51, 52, 53, 61, 62, 63, 71 und 72, deren Anschlüsse aus den Bereichen 10, 20 und 30 herausgeführt sind. Schließlich befindet sich im Bereich 10 mindestens eine Heizeinrichtung, welche durch eine elektrische Heizung 8, durch an einen an eine der Rohrleitungen 51, 52, 53 angeschlossenen Umweltkollektor und bzw. oder einen anderen Erzeuger für Wärmeenergie gebildet ist. Die Heizung 8 ist über eine elektrische Leitung 81 an photovoltaische Elemente oder an eine Leitung für überschüssige Elektroenergie angeschlossen. Durch die Rohrleitungen kann ein Wärmeträger bzw. ein Kälteträger, wie Glykol oder Öl, geleitet werden.

### Die Wirkungsweise dieser Anlage ist wie folgt:

Durch die im innersten Bereich 10 befindliche mindestens eine Heizeinrichtung 8 und bzw. oder durch einen weiteren Erzeuger von Wärmeenergie wird dieser Bereich 10 auf eine Temperatur von 100°C bis 500°C erhitzt, welche Energie in diesem Bereich 10 gespeichert wird. Hierdurch steht Wärmeenergie mit einer sehr hohen Temperatur zur Verfügung, welche an einen Verbraucher, welcher mit hoher Temperatur gespeist werden muß, abgegeben werden kann. Diese Energie kann z.B. über die Leitung 51, welche herausgeführt ist, zum Betrieb eines Elektrogenerators verwendet werden. Zudem kann mit dieser Energie ein Heizkessel, ein Warmwassererzeuger, ein Backofen u. dgl. gespeist werden.

Solche Wärmeenergie welche aus dem innersten Bereich 10 radial nach außen abströmt, gelangt in den diesen Bereich 10 umgebenden Bereich 20, in welchem sich ein Wärmeträger mit einer Temperatur von 50°C bis 100°C befindet. Über die in diesem Bereich 20 befindlichen Rohrleitungen 61, 62, 63 wird Medium an eine zweite Gruppe von Verbrauchern, wie eine Warmwassererzeugung, eine Heizungsanlage usw., abgegeben. In dem den zweiten Bereich 20 umgebenden dritten Bereich 30 befindet sich ein Wärmeträger mit einer Temperatur von 25°C bis 50°C, welcher über die Rohrleitungen 71 und 72 an eine dritte Gruppe von Verbrauchern mit geringerem Temperaturbedarf abgegeben wird.

Aus den Bereichen 10, 20 und 30 wird jedoch nicht nur Wärmeenergie entnommen, sondern es kann in sämtliche diese Bereiche auch Wärmeenergie eingespeist werden. Somit liegen drei Bereiche mit unterschiedlichen Temperaturniveaus vor, aus welchen jeweils Wärmeenergie mit derjenigen Temperatur entnommen werden kann, welche für die betreffenden Verbraucher benötigt wird und in welche ebenso Wärmeenergie mit jeweils demjenigen Temperaturniveau eingespeist wird, welches von Erzeugern an Wärmeenergie benötigt wird.

Die Erzeuger an Wärmeenergie sind dabei photovoltaische Elemente, Wärmekollektoren, Wärmepumpen, Anlagen von welchen Abwärme abgegeben wird, Wärmepumpen u. dgl. mehr. Maßgeblich ist dabei, daß die zur Verfügung stehende Wärmeenergie immer in denjenigen Bereich eingespeist wird bzw. aus demjenigen Bereich entnommen wird, welcher das entsprechende Temperaturniveau aufweist. Zudem kann z.B. Elektroenergie in thermische Energie umgewandelt und gespeichert werden.

Dadurch, daß die einzelnen Bereiche mit unterschiedlichen Temperaturniveaus ineinander angeordnet sind, geht aus dem innersten Bereich 10 abströmende Wärmeenergie nicht verloren, sondern gelangt sie in den diesen umgebenden äußeren Bereich 20. Ebenso gilt dies für aus dem Bereich 20 in den Bereich 30 abströmende Wärmeenergie. Durch den Reflektor 13 wird ein Abfließen von Energie aus dem innersten Bereich 10 weitgehend vermieden.

Soferne es sich um eine große Anlage handelt, kann diese im Erdboden durch Herstellung der Wände 1, 2 und 3 für die Bereiche 10, 20 und 30 erzeugt werden. Bei kleineren Anlagen können diese Wände im Behälter 4 angeordnet sein, welcher im Erdboden versetzt wird.

In analoger Weise kann eine derartige Anlage auch zur Speicherung von Kälteenergie herangezogen werden.

## Patentansprüche

1. Anlage zur Speicherung von Wärmeenergie mit im Erdboden versetzten Rohrleitungen, mit mehreren konzentrisch zueinander angeordneten Bereichen (10, 20, 30), welche jeweils Energie speicherndes Material und Rohrleitungen (51, 52, 53, 61, 62, 63, 71, 72) enthalten, wobei die in den einzelnen Bereichen (10, 20, 30) angeordneten Rohrleitungen an Verbraucher mit unterschiedlichen Temperaturniveaus anschließbar sind, und mit einem Elektrogenerator, **dadurch gekennzeichnet, daß** der innerste Bereich [10] mit einer elektrischen Heizeinrichtung (8) und zudem vorzugsweise mit mindestens einer Rohrschlange für den Anschluß an einen Kollektor für Umweltenergie, eine Wärmepumpe, eine Wärmeanlage od.dgl. ausgebildet ist daß der innerste Bereich (10) für die Speicherung von Wärmeenergie mit Temperaturen zwischen 100°C und 500°C vorgesehen ist und daß eine Leitung (51) der aus dem innersten Bereich herausgeführten Leitungen (51, 52, 53) zum Betrieb des Elektrogenerators verwendet ist.

2. Anlage nach Anspruch 1, **dadurch gekennzeichnet, daß** an der Innenseite der Wand (1) des innersten Bereiches (10) ein Reflektor (13) vorgesehen ist.

3. Anlage nach einem der Ansprüche 1 und 2, **dadurch gekennzeichnet, daß** der außerhalb des innersten Bereiches (10) vorgesehene Bereich (20) zur Speicherung von Energie mit einer Temperatur von 100°C bis 50°C und der außerhalb desselben befindliche Bereich (30) zur Speicherung von Temperaturen von 50°C bis 25°C vorgesehen ist.

4. Anlage nach einem der Patentansprüche 1 bis 3, **dadurch gekennzeichnet, daß** sie als Behälter (4) ausgebildet ist, in welchem sich ineinander angeordnete Bereiche (10, 20, 30) mit Speichermaterialien und Rohrleitungen befinden (51, 52, 53, 61, 62, 63, 71, 72), wobei die Rohrleitungen zum Anschluß an Erzeuger bzw. an Verbraucher mit unterschiedlichen Temperaturniveaus bestimmt sind.

## Claims

1. Plant for the storage of heat energy, with pipelines set in the ground, and with a plurality of regions (10, 20, 30) which are arranged concentrically to one another and which each contain energy-storing material and pipelines (51, 52, 53, 61, 62, 63, 71, 72), the pipelines arranged in the individual regions (10, 20, 30) being connectable to consumers with different temperature levels and to an electric generator, **characterized in that** the innermost region (10) is designed with an electric heating device (8) and also preferably with at least one pipe coil for connection to a collector for environmental energy, a heat pump, a heat system or the like, **in that** the innermost region (10) is provided for the storage of heat energy with temperatures of between 100°C and 500°C, and **in that** a line (51) of the lines (51, 52, 53) led out of the innermost region is used for operating the electric generator.

2. Plant according to Claim 1, **characterized in that** a reflector (13) is provided on the inside of the wall (1) of the innermost region (10).

3. Plant according to one of Claims 1 and 2, **characterized in that** the region (20) provided outside the innermost region (10) is provided for the storage of energy with a temperature of 100°C to 50°C and the region (30) located outside the said innermost region is provided for the storage of temperatures of 50°C to 25°C.

4. Plant according to one of Claims 1 to 3, **characterized in that** it is designed as vessel (4), in which are located regions (10, 20, 30) arranged one in the other and having storage materials and pipelines (51, 52, 53, 61, 62, 63, 71, 72), the pipelines being intended for connection to generators or to consumers with different temperature levels.

## Revendications

1. Installation d'accumulation d'énergie thermique ayant des conduites enterrées dans le sol, plusieurs zones (10, 20, 30) disposées concentriquement les unes par rapport aux autres, qui comportent chacune du matériel d'accumulation d'énergie et des conduites (51, 52, 53, 61, 62, 63, 71, 72), moyennant quoi, les conduites disposées dans les zones individuelles (10, 20, 30) peuvent être raccordées aux consommateurs avec des niveaux de température différents et à un générateur électrique, **caractérisée en ce que** la zone la plus interne (10) est formée avec une installation de chauffage électrique (8) et en outre, de préférence, avec au moins un serpentin pour le raccordement à un collecteur d'énergie peu polluante, une pompe à chaleur, une installation thermique ou analogue, **en ce que** la zone la plus interne (10) est prévue pour l'accumulation d'énergie thermique à des températures situées entre 100°C et 500°C, et **en ce qu'**une conduite (51) parmi les conduites (51, 52, 53) menées à l'extérieur de la zone la plus interne est utilisée pour l'exploitation du générateur électrique.

2. Installation selon la revendication 1, **caractérisée en ce qu'**un réflecteur (15) est prévu sur le côté intérieur de la paroi (1) de la zone la plus interne (10).

3. Installation selon l'une quelconque des revendications 1 et 2, **caractérisée en ce que** la zone (20) prévue hors de la zone (10) la plus interne est prévue pour accumuler l'énergie à une température située entre 100°C et 50°C et la zone (30) se trouvant en dehors de ladite zone est prévue pour le stockage des températures situées entre 50°C et 25°C.

4. Installation selon l'une quelconque des revendications 1 à 3, **caractérisée en ce qu'**elle est formée en tant que réservoir (4), dans lequel se trouvent des zones (10, 20, 30) disposées les unes dans les autres avec des matériels d'accumulation et des conduites (51, 52, 53, 61, 62, 63, 71, 72), moyennant quoi, les conduites destinées au raccordement au producteur ou au consommateur sont déterminées avec des niveaux de température différents.
